(19) Europäisches Patentamt
European Patent Office
Office européen des brevets

(11) Publication number: **0 090 527**
**B1**

(12) # EUROPEAN PATENT SPECIFICATION

(45) Date of publication of patent specification: **23.07.86**

(51) Int. Cl.$^4$: **B 23 K 35/362** // B23K25/00

(21) Application number: **83301300.6**

(22) Date of filing: **09.03.83**

(54) **A flux composition for electro-slag over-lay welding of a cylindrical vessel with a strip electrode.**

(30) Priority: **26.03.82 JP 47302/82**

(43) Date of publication of application:
**05.10.83 Bulletin 83/40**

(45) Publication of the grant of the patent:
**23.07.86 Bulletin 86/30**

(84) Designated Contracting States:
**DE FR GB IT SE**

(56) References cited:
**US-A-3 805 016**

**PATENT ABSTRACTS OF JAPAN, unexamined applications, M field, vol. 5, no. 39, March 14, 1981, THE PATENT OFFICE JAPANESE GOVERNMENT, page 125 M 59**

**PATENTS ABSTRACTS OF JAPAN, unexamined applications, C section, vol. 3, no. 27, March 7, 1979, THE PATENT OFFICE JAPANESE GOVERNMENT, page 85 C 39**

(73) Proprietor: **KAWASAKI STEEL CORPORATION**
**1-28, Kitahonmachi-Dori 1-Chome**
**Chuo-ku Kobe-Shi Hyogo 650 (JP)**

(72) Inventor: **Tateishi, Junji**
**723, Nitona-Cho**
**Chiba City (JP)**
Inventor: **Ishikawa, Takeharu**
**2050, Kusakari**
**Ichihara City (JP)**
Inventor: **Nakano, Shozaburo**
**2220-6, Nagao**
**Mobara City (JP)**
Inventor: **Nishiyama, Noboru**
**4617-2, Goi**
**Ichihara City (JP)**

(74) Representative: **Overbury, Richard Douglas et al**
**HASELTINE LAKE & CO Hazlitt House 28**
**Southampton Buildings Chancery Lane**
**London WC2A 1AT (GB)**

**EP 0 090 527 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to the electro-slag over-lay welding of a cylindrical vessel using a strip electrode.

The inner surface of cylindrical vessels used for pressure vessels for atomic power generation and reactors for chemical plant is frequently surfaced with stainless steel or the like by over-lay welding to provide corrosion resistance. The over-lay welding has been carried out by various processes but recently the technique of electro-slag over-lay welding with a strip electrode in the down hand position, in which dilution by base metal is low, has been of interest. This process comprises passing electric current through a molten slag from the strip electrode to generate Joule's heat and melting the electrode and the base metal by this heat.

The electro-slag over-lay welding process is an excellent one wherein little dilution by the base metal occurs but when this process is applied to the surfacing of a cylindrical circumferential surface, particularly the inner surface of the above described pressure vessel, the state of flow of the molten slag and metal varies at the edge portions and the central portion of the cylinder in dependence on the means and place used for electrically connecting the cylinder and the influence of the magnetic field generated by the current supplying cable. Also the molten metal flow varies in the vicinity of the electrical connection and the defects of under cutting and slag inclusion are apt to be caused. Further, and particularly when a broad strip electrode is used for improving the surfacing efficiency, the electric current tends to be large and therefore the above described tendency becomes noticeable. Even if the conditions under which a good bead can be obtained by means of a broad electrode are found experimentally, such conditions often cannot be used in a satisfactory electro-slag over-lay welding process in practice.

Furthermore, the cylindrical vessels are made by bend-working a steel sheet, and the working precision is such that it is impossible to obtain a true cylinder. When the resultant distorted cylinder is subjected to over-lay welding while being rotated on a turning roller, the position where the strip electrode for the electro-slag over-lay welding is set influences the welding, so that careful consideration needs to be given to the variation of this position.

Japanese Patent Laid-open specification No. 55(1980)-136,566 (U.S. Patent 4,309,587) has disclosed the application of an external electro-magnetic field to a welding current to generate Lorentz's force whereby the flow of the molten slag can be controlled as shown in Fig. 2 of the accompanying drawings. If the flow of the molten slag and metal is controlled with an external electro-magnetic field as shown in the above U.S. Patent 4,309,587, the variation of the flow due to other factors is effectively restrained and an excellent surfaced bead having no under cutting nor slag inclusion can be easily obtained even when using a broad strip electrode.

It is known to use fluxes when carrying out welding operations and fluxes having a high $CaF_2$ content are disclosed in Japanese Patent Publication No. 53(1978)-29,657 and Japanese Patent Laid-open Specification No. 55(1980)-165,294 and a flux having a high $TiO_2$ content is disclosed in Japanese Patent Laid-open Specification No. 54(1979)-9,139.

It is an object of the present invention to provide a flux which prevents under cutting and slag inclusion when the inner surface of a pressure vessel for a nuclear power station or chemical plant is surfaced with stainless steel in an electro-slag over-lay welding process using a strip electrode in the down hand position wherein magnetic stirring of the molten slag and metal is effected by means of an external electromagnetic field.

In order to attain this object, the following requirements have been noted:—

(1) In order to effect stable electro-slag over-lay welding wherein an arc is scarcely formed, the electro-conductivity of the slag needs to be high.
(2) The slag needs to have a moderate viscosity (when the viscosity is too low, control of the flow of the molten slag is difficult and when the viscosity is too high, the slag does not flow).
(3) Harmful $SiF_4$ gas should not be formed.

It has been found that requirement (1) can be attained by including in the flux, from 50 to 60% by weight of $CaF_2$, that requirement (2) can be attained by including, in the flux, from 10 to 20% by weight of $SiO_2$ provided that the ratio of $SiO_2/CaF_2$ is at least 0.20, and that requirement (3) can be attained by including, in the flux, CaO in an amount such that the ratio of $CaO/SiO_2$ is at least 0.5.

Accordingly the present invention provides a method of electro-slag over-lay welding stainless steel on to the circumferential inner surface of a cylindrical vessel using a strip electrode and controlling the flow of molten slag and metal with an external electro-magnetic field characterised in that a flux is used which comprises from 50 to 60% by weight of $CaF_2$, from 10 to 20% by weight of $SiO_2$, from 5 to 25% by weight of CaO, from 10 to 30% by weight of $Al_2O_3$, not more than 10% by weight of manganese oxide, and not more than 10% by weight of chromium oxide, provided that the value of $SiO_2/CaF_2$ is at least 0.20, the value of $CaO/SiO_2$ is at least 0.50, and the total amount of manganese oxide and chromium oxide, if these components are present, is less than 15% by weight.

For a better understanding of the invention and to show how the same may be carried out, reference will now be made, by way of example, to the accompanying drawings, wherein:

Fig. 1 is a cross-sectional view through a cylinder being subjected to electro-slag over-lay welding on its circumferential surface using a strip electrode;

Fig. 2 is a perspective view of a part of Fig. 1 illustrating the manner in which the flow of the molten pool may be controlled by an external electro-magnetic field;

Fig. 3 is a graph showing the influence, upon the welding behaviour in electro-slag over-lay welding, of the $SiO_2$ content of a flux relative to the $CaF_2$ content, and

Fig. 4 is a graph showing the influence of the CaO content of the flux upon prevention of the production of a stimulant (obnoxious) smell when welding.

The inventors have studied the effect of the flux components upon the control of flow when applying the electro-slag over-lay welding process to a cylinder along the circumferential surface thereof and controlling the flow of the molten slag and metal with an external electro-magnetic field.

These studies established that when a flux having a high $CaF_2$ content and a low $SiO_2$ content (as described on Japanese Patent Publication No. 53(1978)-29,657) is used, the viscosity of the slag is low and it is difficult to control the flow of the molten slag and metal with the external electro-magnetic field and that when a flux having a low $CaF_2$ content (as described in Japanese Patent Laid-open Specification No. 55(1980)-165-294) is used, an undesirable arc is apt to be formed during the over-lay welding of the inner surface of the cylinder using the electro-slag over-lay welding process, the range of permissible welding conditions is narrow, and the viscosity is too high so that the fluidity of the molten slag is low and the control of the flow with the external electro-magnetic field becomes difficult.

These studies were carried out using a fused flux having a composition of 52% by weight of $CaF_2$, 7% by weight of $SiO_2$, 33% by weight of $Al_2O_3$, 5% by weight of MnO and 3% by weight of $ZrO_2$ (which is similar to the composition of Example 3 of Japanese Patent Publication No. 53(1978)-29,657) and a fused flux having a composition of 45% by weight of $CaF_2$, 15% by weight of $SiO_2$, 15% by weight of CaO, 20% by weight of $Al_2O_3$ and 5% by weight of $Cr_2O_3$ (which is similar to the composition of an Example in Japanese Patent Laid-open Specification No. 55(1980)-165,294. These fluxes were used in an electro-slag over-lay welding process carried out on the inner surface of a cylinder having an inner diameter of 2m under the following conditions.

As shown in Fig. 1, the cylinder 1 was rotated in the direction shown by arrow α and a strip electrode 2 of SUS 309L and dimensions 0.4×150 mm was used as the welding electrode with a welding current of 2,500 A and a voltage of 28 V. The peripheral speed of the cylinder was such that the welding speed was 15 cm/min and the controlling external electro-magnetic field was applied by arranging a pair of coils 3 and 3′ (each including 400 turns wound around iron cores) behind the strip electrode 2 (that is at the opposite side of the electrode to the molten pool 4) at both sides of the strip electrode 2 and passing a current of from 1 to 10 A through each coil as shown in Fig. 2.

In Figs. 1 and 2, numeral 5 is a pair of rolls for feeding the electrode, numeral 6 is the flux, numeral 7 is slag, numeral 8 is the surfaced metal, and reference β shows the direction of the controlled flow in the molten pool 4 composed of molten slag 4A and molten metal 4B.

In the case where the flux of Japanese Patent Publication No. 53(1978)-29,657 was used, the molten slag reacted too sensitively to enable it to be controlled, the overlapped portion of the bead was not uniform, and under cuttings were formed.

In the case where the flux of Japanese Patent Laid-open Specification No. 55(1980)-165294 was used, when the position of the strip electrode 2 shown in Fig. 1 was such that its distance l from the downward vertical radius line γ of the cylinder 1 was more than 15 mm, an arc formed whereas when said distance was less than 5 mm, the defects of slag inclusion and lack of fusion were apparent. The range of satisfactory conditions is narrow and, when the working precision to which the cylinder is made is taken into consideration, there is a problem in maintaining these conditions in practice. Moreover, even if the distance l of the electrode position is kept in the range of from 5 to 15 mm, the flow control using the external electro-magnetic field becomes very insensitive because of the high viscosity of the molten slag and the variation of the slag flow due to the instatiblity of the ground position and the voltage supply cannot be satisfactorily controlled.

The inventors have prepared a variety of fluxes having a high $CaF_2$ content and giving rise to stable current flow and low arc formation and have studied these fluxes. They have found that when a moderate amount of $SiO_2$ is included in a flux having a $CaF_2$ content of from 50 to 60% by weight, the flow of the molten slag and metal can be advantageously and properly controlled with the external electro-magnetic field.

That is, as shown in Fig. 3, it has been found that if the ratio of $SiO_2/CaF_2$ is at least 0.20 within a range of from 50 to 60% by weight of $CaF_2$, the flow of the molten slag and metal can be satisfactorily controlled with the external electro-magnetic field.

In this experiment, the other components of the flux were 0 to 25% by weight of CaO and 10 to 35% by weight of $Al_2O_3$.

When the $SiO_2$ content exceeds 20%, the viscosity is excessively high and flow control becomes difficult. When the $CaF_2$ content exceeds 60%, even if the ratio of $SiO_2/CaF_2$ is at least 0.20, the viscosity becomes excessively low and flow control becomes difficult.

When the $CaF_2$ content is more than 50%, $SiO_2$ reacts with $CaF_2$ to generate $SiF_4$ gas as follows:

$$SiO_2+CaF_2 \rightarrow SiF_4+CaO$$

The resulting $SiF_4$ has a stimulant (obnoxious) smell and is harmful from the point of view of industrial hygiene. However, the addition of CaO lowers the activity of the $SiO_2$ and decreases the generation of $SiF_4$.

Studies have been made with respect to this point and it has been found that, as shown in Fig. 4, when the ratio of $CaO/SiO_2$ is at least 0.50, there is no stimulant smell and the formation of $SiF_4$ is prevented. But, when the CaO content exceeds 25%, the separation of the slag becomes difficult. Thus the CaO content should not be more than 25%.

$Al_2O_3$ is effective in an amount of not less than 10% by weight to produce a desirable wave form of the bead surface but when the amount exceeds 30% by weight, the bead surface becomes locally concave and the bead appearance is damaged. Thus the amount must be within the range of 10 to 30% by weight.

When the amount of Mn and Cr in the surfaced metal must be increased, oxides of Mn and Cr may be included in the flux. If the amount of either of these components is 10% by weight or the total amount of these components exceeds 15% by weight, it comes more difficult to separate the slag, defects are caused at the toe portion of the bead, and flow control by means of the external electro-magnetic field becomes difficult. Thus, if such oxides are added, the added amount of each component should be less than 10% by weight and the total amount of these components should be less than 15% by weight.

Typical fluxes used in the above described test and the results obtain are shown in the following Table 1.

TABLE 1(a)

| | Chemical components (wt%) | | | | | Welding test results | | | | |
|---|---|---|---|---|---|---|---|---|---|---|
| | $CaF_2$ | $SiO_2$ | CaO | $Al_2O_3$ | Other | Arc formation | Control of slag | Stimulant smell | Separability of slag | Bead appearance |
| F-1 | 45 | 10 | 15 | 30 | 0 | × | × | o | o | × |
| 2 | ″ | 15 | 15 | 20 | $Cr_2O_3$ 5 | × | × | o | o | × |
| 3 | ″ | 20 | 10 | 25 | 0 | × | × | o | o | × |
| 4 | 48 | 7 | 25 | 20 | 0 | o | × | o | o | × |
| 5 | ″ | 12 | 15 | 25 | 0 | o | Δ | o | o | × |
| 6 | ″ | 18 | 15 | 19 | 0 | × | o | o | o | o |
| 7 | 50 | 10 | 10 | 30 | 0 | o | o | o | o | o |
| 8 | ″ | 15 | 10 | 25 | 0 | o | o | o | o | o |
| 9 | ″ | 20 | 0 | 30 | 0 | o | o | × | o | o |
| 10 | ″ | 25 | 15 | 10 | 0 | × | o | o | o | o |
| 11 | 52 | 7 | 0 | 33 | MnO 5<br>$ZrO_2$ 3 | o | × | × | o | × |
| 12 | ″ | 7 | 25 | 16 | 0 | o | × | o | o | × |

TABLE 1(b)

| | Chemical components (wt%) | | | | | Welding test results | | | | |
|---|---|---|---|---|---|---|---|---|---|---|
| | $CaF_2$ | $SiO_2$ | CaO | $Al_2O_3$ | Other | Arc formation | Control of slag | Stimulant smell | Separability of slag | Bead appearance |
| F-13 | 52 | 12 | 15 | 21 | 0 | o | o | o | o | o |
| 14 | " | 18 | 15 | 15 | 0 | o | o | o | o | o |
| 15 | 55 | 10 | 10 | 25 | 0 | o | × | o | o | × |
| 16 | " | 15 | 0 | 30 | 0 | o | o | × | o | o |
| 17 | " | 20 | 10 | 15 | 0 | o | o | o | o | o |
| 18 | " | 25 | 5 | 15 | 0 | o | × | × | o | × |
| 19 | 58 | 7 | 0 | 35 | 0 | o | × | × | o | × |
| 20 | " | 7 | 5 | 30 | 0 | o | × | o | o | × |
| 21 | " | 12 | 15 | 15 | 0 | o | o | o | o | o |
| 22 | " | 18 | 5 | 19 | 0 | o | o | × | o | o |
| 23 | 60 | 10 | 0 | 30 | 0 | o | × | × | o | × |
| 24 | " | 15 | 10 | 15 | 0 | o | o | o | o | o |

TABLE 1(c)

| | Chemical components (wt%) | | | | | Welding test results | | | | |
|---|---|---|---|---|---|---|---|---|---|---|
| | $CaF_2$ | $SiO_2$ | CaO | $Al_2O_3$ | Other | Arc formation | Control of slag | Stimulant smell | Separability of slag | Bead appearance |
| F-25 | 60 | 20 | 0 | 20 | 0 | o | o | × | o | o |
| 26 | ″ | 25 | 5 | 10 | 0 | o | × | × | o | × |
| 27 | 63 | 7 | 0 | 30 | 0 | o | × | × | o | × |
| 28 | ″ | 7 | 5 | 25 | 0 | o | × | o | o | × |
| 29 | 63 | 12 | 5 | 20 | 0 | o | × | × | o | × |
| 30 | ″ | 18 | 5 | 14 | 0 | o | × | × | o | × |
| 31 | 50 | 12 | 6 | 32 | 0 | o | o | o | o | × |
| 32 | 58 | 20 | 14 | 8 | 0 | o | o | o | o | × |
| 33 | 52 | 12 | 10 | 16 | $Cr_2O_3$ 10 | o | o | o | o | o |
| 34 | ″ | 12 | 10 | 13 | $Cr_2O_3$ 13 | o | Δ | o | × | Δ |
| 35 | ″ | 12 | 10 | 16 | MnO 10 | o | o | o | o | o |

TABLE 1(d)

| | Chemical components (wt%) | | | | | Welding test results | | | | |
|---|---|---|---|---|---|---|---|---|---|---|
| | $CaF_2$ | $SiO_2$ | CaO | $Al_2O_3$ | Other | Arc formation | Control of slag | Stimulant smell | Separability of slag | Bead appearance |
| F-36 | 52 | 12 | 10 | 13 | MnO 13 | o | Δ | o | × | Δ |
| 37 | ″ | 12 | 8 | 11 | $Cr_2O_3$ 10<br>MnO 7 | o | Δ | o | × | Δ |

Welding condition SUS 309L 0.4×150 mm, 2,500A-28V-15 cm/min
Inner diameter of cylinder: 2 m Electrode position: l=30 mm

Arc formation
× Arc is formed
o Arc is not formed

Control of slag
× Impossible
Δ Unsatisfactory
o Possible

Stimulant smell
× Generate
o Not generate

Separability of slag
× Bad
o Good

Bead appearance
× Bad
Δ Irregular bead edge
o Good

In the present invention, by using a flux containing 50 to 60% by weight of $CaF_2$, 10 to 20% by weight of $SiO_2$, 5 to 25% by weight of CaO, and 10 to 30% by weight of $Al_2O_3$ with a ratio of $SiO_2/CaF_2$ of at least 0.20 and a ratio of $CaO/SiO_2$ of at least 0.50, the electro-slag over-lay welding process can be safely and advantageously applied to the circumferential surface of a cylinder while controlling the flow of the molten slag and metal with an external electro-magnetic field.

The flux of the present invention can be used in the electro-slag over-lay welding process with a cylinder having an inner diameter of from 700 to 6,000 mm using a welding speed of from 8 to 30 cm/min.

The following Examples are given for the purpose of illustration of this invention and are not intended as limitations thereof.

Example 1

The inner surface of a cylinder formed from a sheet of thickness 80 mm, having an inner diameter of 2 m, and composed of ASTM A 533 GrB Cl 1 steel was subjected to over-lay welding along the circumferential direction by using a strip electrode formed of the austenitic stainless steel SUS 309L of SUS 347 (both steel strips having the dimensions: 0.4×150 mm) in accordance with Fig. 1.

The fluxes used were fused fluxes prepared by fusing the components of each of F101 to 103 in Table 2 and pulverizing the fused product to a size of from 20 to 200 mesh.

TABLE 2

| | | Flux | | | | | | | | Welding test results | | | | |
|---|---|---|---|---|---|---|---|---|---|---|---|---|---|---|
| | | $CaF_2$ (%) | $SiO_2$ (%) | $SiO_2$/$CaF_2$ | CaO (%) | CaO/$SiO_2$ | $Al_2O_3$ (%) | $Cr_2O_3$ (%) | MnO (%) | Arc formation | Control of slag | Stimulant smell | Bead appearance | Total judgement |
| Present invention | F101 | 58 | 12 | 0.21 | 15 | 1.25 | 15 | 0 | 0 | o | o | o | o | Acceptable |
| | 102 | 55 | 18 | 0.33 | 10 | 0.56 | 12 | 5 | 0 | o | o | o | o | Acceptable |
| | 103 | 52 | 12 | 0.23 | 15 | 1.25 | 13 | 5 | 3 | o | o | o | o | Acceptable |
| Comparative Example | 2 | 45 | 15 | 0.38 | 15 | 1.00 | 20 | 5 | 0 | × | × | o | Under cutting | Non-acceptable |
| | 11 | 52 | 7 | 0.13 | 0 | — | 33 | $ZrO_2$ 3 | 5 | o | × | × | Under cutting | Non-acceptable |
| | 16 | 58 | 18 | 0.31 | 5 | 0.28 | 19 | 0 | 0 | o | o | × | o | Non-acceptable |
| | 29 | 63 | 12 | 0.19 | 5 | 0.41 | 20 | 0 | 0 | o | × | × | Under cutting | Non-acceptable |

The estimation marks of "arc formation", "control of slag", "stimulant smell" and "bead appearance" have the same meanings as in Table 1.

The welding conditions were as follows: The welding current was 2,500 A, the welding voltage was 28 V and the welding speed was 15 cm/min. The external electro-magnetic field was provided by coils comprising 400 turns wound around an iron core and arranged as shown in Fg. 2. The control was effected by passing current of 1 to 10 A through the coils.

The position of the strip electrode was such that the distance l shown in Fig. 1 was 30 mm.

The chemical components of each strip electrode and the surface metal obtained thereby in each case are shown in Tables 3 and 4. In every case, control of the flow of the molten slag and metal by the external electro-magnetic field was easy and good surfaced beads having no defects, such as under cutting, were obtained.

TABLE 3

| | Flux | Chemical components (wt%) | | | | | | |
|---|---|---|---|---|---|---|---|---|
| | | C | Si | Mn | P | S | Ni | Cr |
| Strip electrode | — | 0.02 | 0.31 | 2.20 | 0.018 | 0.005 | 10.63 | 20.86 |
| Surfaced metal | F101 | 0.04 | 0.55 | 1.68 | 0.020 | 0.005 | 9.78 | 18.53 |
| | F102 | 0.04 | 0.61 | 1.70 | 0.021 | 0.005 | 9.83 | 18.89 |
| | F103 | 0.04 | 0.54 | 2.14 | 0.021 | 0.005 | 9.63 | 19.04 |

Electrode: SUS 309L 0.4×150 mm

TABLE 4

| | Chemical components (wt%) | | | | | | | |
|---|---|---|---|---|---|---|---|---|
| | C | Si | Mn | P | S | Ni | Cr | Nb |
| Electrode | 0.03 | 0.35 | 1.89 | 0.021 | 0.003 | 11.21 | 19.86 | 0.87 |
| Surfaced metal | 0.05 | 0.59 | 1.35 | 0.022 | 0.004 | 10.42 | 19.24 | 0.61 |

Flux F102
Electrode SUS 347

However, the Comparative fluxes shown in Table 2 were judged to be "non-acceptable" because of the problems shown in the welding test results of the Table.

Example 2

The over-lay welding test described in Example 1 was repeated using a sintered flux, prepared by granulating and drying the flux composition shown in F102 in Table 2 and screening the granules to a size of from 12 to 200 mesh, and a ferritic stainless steel strip electrode SUS 410 (0.4×150 mm).

The chemical components of the electrode and of the surfaced metal are shown in Table 5. The control of the flow of the molten slag and metal was easy and a good surfaced bead having no defects, such as under cutting, was obtained.

TABLE 5

| | Chemical component (wt%) | | | | | |
|---|---|---|---|---|---|---|
| | C | Si | Mn | P | S | Cr |
| Electrode | 0.04 | 0.20 | 0.58 | 0.020 | 0.010 | 13.96 |
| Surfaced metal | 0.06 | 0.45 | 0.41 | 0.022 | 0.009 | 13.04 |

Flux F102 Sintered type
Electrode SUS 410

As mentioned above, when an electro-slag over-lay welding process is applied to the circumferential surface of a cylindrical vessel while controlling the flow of the molten slag and metal with an external electro-magnetic field, the use of a flux in accordance with the present invention enables the flow control to be satisfactorily carried out and the over-lay welding to be effected without defects in spite of variations in the position at which the strip electrode is arranged as a consequence of errors in producing the cylindrical vessel.

**Claim**

A method of electro-slag over-lay welding stainless steel on the circumferential inner surface of a cylindrical vessel using a strip electrode and controlling the flow of molten slag and metal with an external electro-magnetic field characterised in that a flux is used which comprises from 50 to 60% by weight of $CaF_2$, from 10 to 20% by weight of $SiO_2$, from 5 to 25% by weight of CaO, from 10 to 30% by weight of $Al_2O_3$, not more than 10% by weight of manganese oxide, and not more than 10% by weight of chromium oxide, provided that the value of $SiO_2/CaF_2$ is at least 0.20, the value of $CaO/SiO_2$ is at least 0.50, and the total amount of manganese oxide and chromium oxide, if these components are present, is less than 15% by weight.

**Patentanspruch**

Verfahren zum Elektro- Schlacken- Auftragsschweißen von rostfreiem Stahl an der am Umfang verlaufenden inneren Oberfläche eines zylindrischen Kessels mittels einer Bandelektrode und unter Kontrolle des Flusses der geschmolzenen Schlacke und des geschmolzenen Metalls mit einem äußeren elektro- magnetischen Feld, dadurch gekennzeichnet, daß ein Flußmittel verwendet wird, welches aus 50 bis 60 Gewichtsprozent $CaF_2$, 10 bis 20 Gewichtsprozent $SiO_2$, 5 bis 25 Gewichtsprozent CaO, 10 bis 30 Gewichtsprozent $Al_2O_3$, nicht mehr als 10 Gewichtsprozent Manganoxid und nicht mehr als 10 Gewichtsprozent Chromoxid besteht und in dem das Verhältnis von $SiO_2/CaF_2$ mindestens 0,20 sowie von $CaO/SiO_2$ mindestens 0,50 ist und der Gesamtanteil an Manganoxid und Chromoxid, bei Anwesenheit dieser Komponenten, weniger als 15 Gewichtsprozent beträgt.

**Revendication**

Procédé de soudage électrique par rechargement sous laitier d'acier inoxydable sur la surface interne circulaire d'un récipient cylindrique en utilisant un fil-électrode et en contrôlant l'écoulement du métal et du laitier fondus avec un champ électromagnétique extérieur, caractérisé en ce qu'on utilise un flux qui comprend de 50 à 60% en poids de $CaF_2$, de 10 à 20% en poids de $SiO_2$, de 5 à 25% en poids de CaO, de 10 à 30% en poids de $Al_2O_3$, pas plus de 10% en poids d'oxyde de manganèse et pas plus de 10% en poids d'oxyde de chrome, pourvu que la valeur de $SiO_2/CaF_2$ soit d'au moins 0,20, que la valeur de $CaO/SiO_2$ soit d'au moins 0,50 et que la quantité totale de l'oxyde de manganèse et de l'oxyde chrome, si ces constituants sont présents, soit inférieure à 15% en poids.

FIG_1

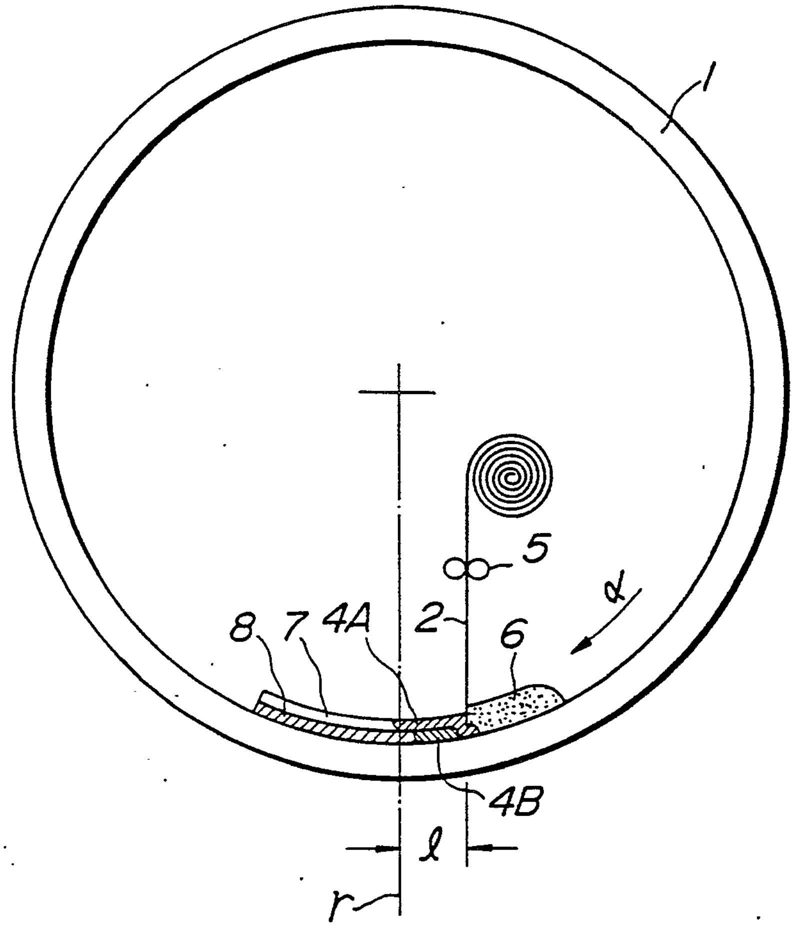


FIG_2

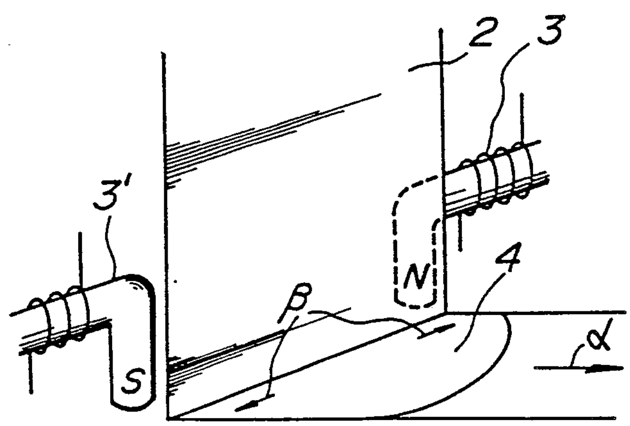

FIG. 3

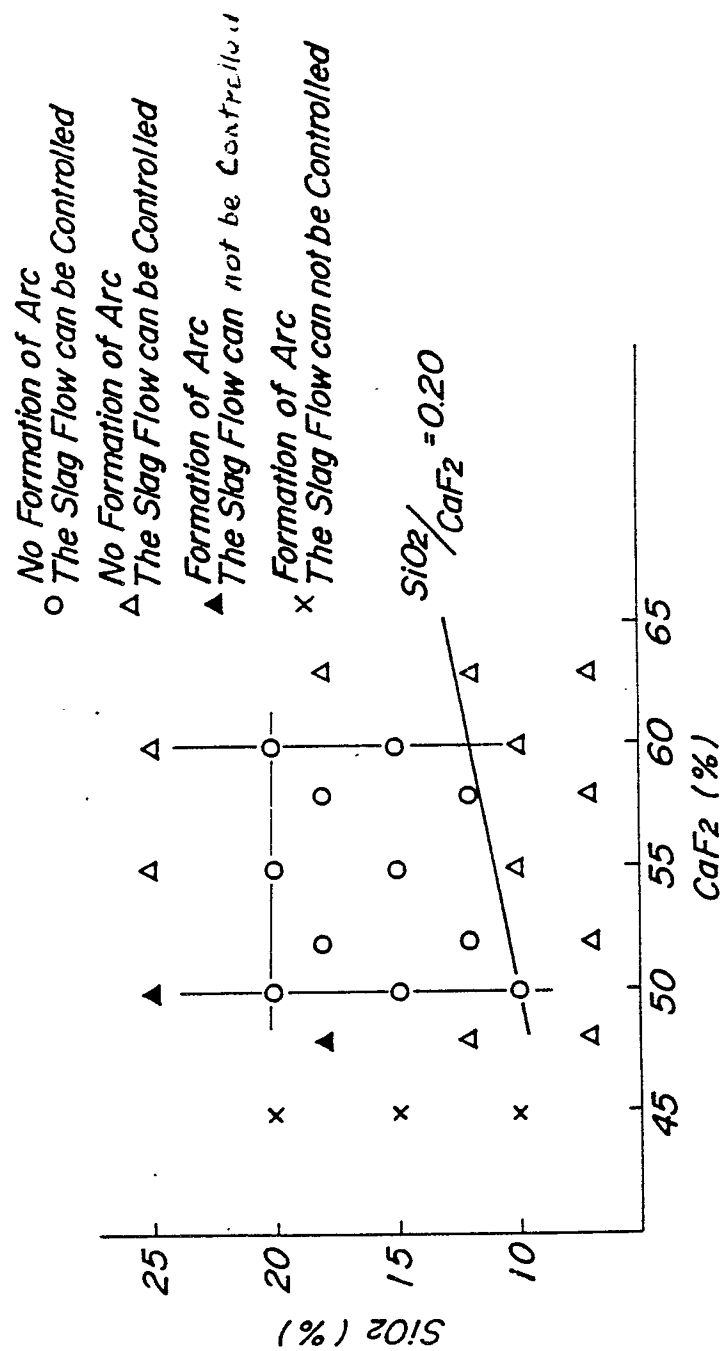

o No Formation of Arc The Slag Flow can be Controlled
Δ No Formation of Arc The Slag Flow can be Controlled
▲ Formation of Arc The Slag Flow can not be Controlled
× Formation of Arc The Slag Flow can not be Controlled
$SiO_2/CaF_2 = 0.20$
$SiO_2$ (%)
25
20
15
10
45
50
55
60
65
$CaF_2$ (%)

FIG_4

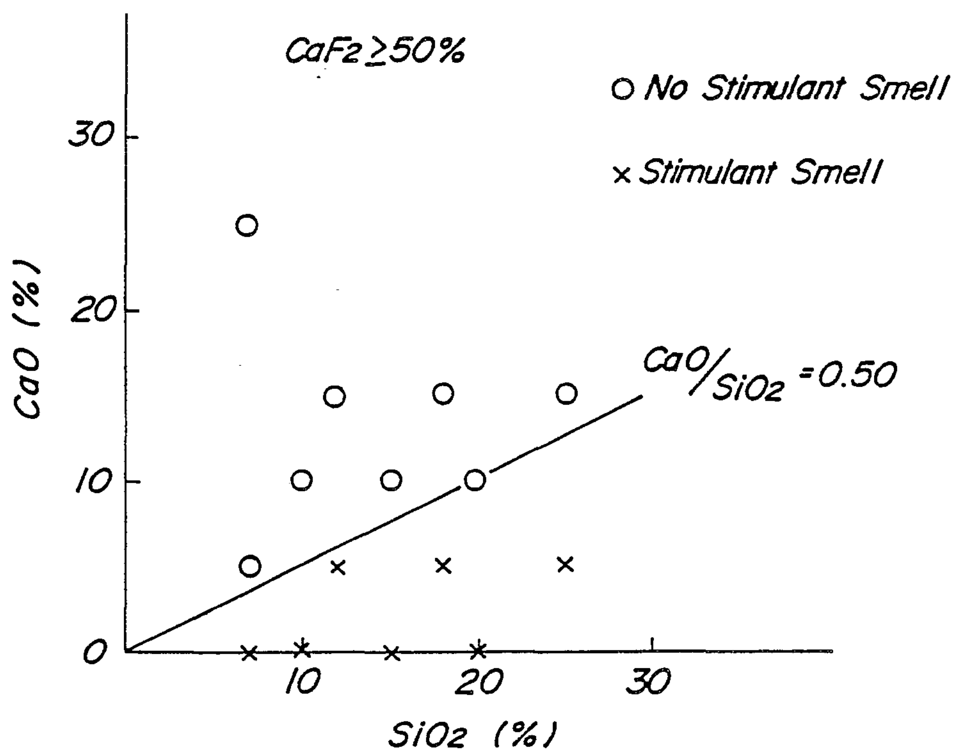

CaF2≥50%
○ No Stimulant Smell
× Stimulant Smell
CaO/SiO2 =0.50
30
20
10
0
10
20
30
CaO (%)
SiO2 (%)